# EUROPÄISCHE PATENTSCHRIFT

(11) **EP 3 899 228 B1**
(45) Veröffentlichungstag und Bekanntmachung des Hinweises auf die Patenterteilung: **01.11.2023**
(21) Anmeldenummer: 19832274.5
(22) Anmeldetag: 19.12.2019
(51) Int. Cl.: F02B 19/12, F02B 19/10, F02M 21/02

(54) **ZYLINDERKOPF FÜR EINE BRENNKRAFTMASCHINE**
CYLINDER HEAD FOR AN INTERNAL COMBUSTION ENGINE
TÊTE DE CYLINDRE POUR UN MOTEUR A COMBUSTION INTERNE

(30) Priorität: 21.12.2018 AT 5026518 U
(43) Veröffentlichungstag der Anmeldung: 27.10.2021
(73) Patentinhaber: Innio Jenbacher GmbH & Co OG, 6200 Jenbach (AT)
(72) Erfinder: SPYRA, Nikolaus, 6020 Innsbruck (AT); SCHAUMBERGER, Herbert, 6232 Münster (AT); GROTZ, Matthias, 6020 Innsbruck (AT); BEC, Isabelle, 6020 Innsbruck (AT); FANKHAUSER, Thomas, 6292 Finkenberg (AT)
(74) Vertreter: Torggler & Hofmann Patentanwälte - Innsbruck
(86) Internationale Anmeldenummer: PCT/AT2019/060444
(87) Internationale Veröffentlichungsnummer: WO 2020/124117

(56) Entgegenhaltungen:
- EP-A1- 3 064 755
- EP-A1- 3 203 050
- EP-A1- 3 255 744
- US-A- 4 969 432

## Beschreibung

Die vorliegende Erfindung betrifft einen Zylinderkopf mit den Merkmalen des Oberbegriffs des Anspruchs 1, sowie eine Brennkraftmaschine mit einem solchen Zylinderkopf.

Ab einem bestimmten Durchmesser der Kolbenbohrung (in etwa 150 mm) werden (Gas-)Brennkraftmaschinen mit einer Vorkammer zur Zündverstärkung ausgestattet. Eine in die Vorkammer ragende Zündquelle - meist eine Zündkerze - entzündet das dort vorliegende, bei gespülter Vorkammer relativ fette, Gemisch, wodurch Zündfackeln von der Vorkammer in einen Hauptbrennraum treten und das dort vorliegende Gemisch entzünden.

In Bezug auf die Brennstoffversorgung der Vorkammer bestehen verschiedene Konzepte. Bei ungespülter Vorkammer wird im Verdichtungstakt Gemisch aus dem Hauptbrennraum in die Vorkammer gedrückt. Bei gespülten Vorkammern besteht darüber hinaus die Möglichkeit, die Vorkammer zusätzlich mit Brennstoff zu versorgen. Der Brennstoff, welcher der Vorkammer bei einer gespülten Vorkammer zugeführt wird, kann (in Bezug auf seine chemische Zusammensetzung und/oder in Bezug auf seine Luftüberschusszahl) demjenigen des Hauptbrennraumes entsprechen oder von diesem verschieden sein. Diese separate Brennstoffversorgung geschieht über ein Vorkammergasventil, welches direkt oder indirekt (über eine Zündkerzenhülse) im Zylinderkopf angeordnet sein kann. Im Folgenden wird jener Brennstoff, welcher der Vorkammer über das Vorkammergasventil zugeführt wird, als Treibgas bezeichnet.

Ein gattungsgemäßer Zylinderkopf ist beispielsweise in EP 3 064 755 A1 gezeigt. Diese Schrift offenbart einen Zylinderkopf mit einer Kavität zur Aufnahme eines Vorkammergasventils, welches indirekt über eine Zündkerzenhülse im Zylinderkopf angeordnet ist. Das Vorkammergasventil ist über einen schräg angeordneten Überströmkanal mit einer Vorkammer verbunden, wobei im Betrieb der Brennkraftmaschine über diesen Überströmkanal der Vorkammer Treibgas zugeführt wird. Ein ähnliches Konzept eines Überstromkanals ist durch die EP 3 061 939 A1 bekannt.

Durch die EP 3 012 444 A1 ist eine Ausführung eines Überstromkanals bekannt, welcher durch eine horizontale und eine vertikale Bohrung zu Versorgung der Vorkammer mit vom Vorkammergasventil kommenden Treibgas ausgeführt ist.

Weiters ist aus der EP 3 012 431 A1 bekannt, einen Ringkanal vorzusehen, welcher über einen Überströmkanal mit dem Vorkammergasventil verbunden ist. Der Ringkanal erstreckt sich um die Vorkammer herum und ist durch eine Vielzahl an radial voneinander beabstandeten Bohrungen mit der Vorkammer verbunden. Durch die Vielzahl an Bohrungen wird erreicht, dass das Treibgas (kommend über den Überstromkanal vom Vorkammergasventil) möglichst gleichmäßig in die Vorkammer eingebracht wird und dort mit möglichst gleichmäßiger Konzentration verteilt wird.

Weitere aus dem Stand der Technik bekannte Ausführungsformen gehen aus der EP 3 255 744 A1 und der EP 3 203 050 A1 hervor.

Bei einem Verbrennungszyklus der Brennkraftmaschine wird der Vorkammer über den Überströmkanal durch das Vorkammergasventil Treibgas zugeführt, wodurch in der Vorkammer ein Treibgas-Luft-Gemisch entsteht (genau genommen vermischt sich dieses Treibgas-Luft-Gemisch in der Vorkammer mit einem Brennstoff-Luft-Gemisch, welches während des Verdichtungstaktes aus dem Hauptbrennraum in die Vorkammer eintritt). Anschließend wird im Hauptbrennraum das dort zugeführte Brennstoff-Luft-Gemisch in einem Verdichtungstakt verdichtet, bis in der Vorkammer durch eine in die Vorkammer ragende Zündkerze die Zündung ausgelöst wird. Das in der Vorkammer gezündete Treibgas-Luft-Gemisch bildet Zündfackeln, welche von der Vorkammer in den Hauptbrennraum treten und die Verbrennung im Hauptbrennraum auslösen.

Generell besteht das Bestreben, das Vorkammergasventil möglichst nahe an der Vorkammer anzuordnen, da das im Überströmkanal vorliegende Treibgas während der Verbrennung nicht oder nur unzureichend verbrannt wird. Dieses teilweise oder unzureichende Verbrennen des Treibgases im Überstromkanal führt jedoch zu einer unerwünschten Erhöhung der Emissionen, insbesondere der HC-Emissionen. Durch ein Verkürzen der Überstromkanals und daraus folglich dem Annähern des Vorkammergasventils an die Vorkammer kann die Menge des im Überstromkanals unverbrannten oder unzureichend verbrannten Treibgases reduziert werden.

Durch die Zündung in der Vorkammer und das Verbrennen des Treibgas-LuftGemisches in der Vorkammer entzündet sich auch das Treibgas-Luft-Gemisch, das im Überströmkanal vorliegt, was zur Bildung von Verbrennungsrückständen führen kann. Verbrennungsrückstände in Form von Ablagerungen an der Mantelfläche des Überströmkanales und/oder am Vorkammergasventil wirken sich sehr negativ aus, da im Überströmkanal aufgrund seines geringen Querschnittes oder am Vorkammergasventil schon geringe Ablagerungen ausreichen, um diesen teilweise oder sogar vollständig zu blockieren.

Aufgabe der Erfindung ist es, einen gegenüber dem Stand der Technik verbesserten Zylinderkopf sowie eine Brennkraftmaschine mit einem solchen Zylinderkopf bereitzustellen.

Diese Aufgabe wird durch einen Zylinderkopf mit den Merkmalen des Anspruches 1 und eine Brennkraftmaschine mit einem solchen Zylinderkopf gelöst.

Bei einem erfindungsgemäßen Zylinderkopfes ist ein Vorkammergasventil in eine Kavität des Zylinderkopf eingesetzt, wobei das Vorkammergasventil über einen Überströmkanal mit der Vorkammer verbunden ist, wobei der Überströmkanal für eine gegebene Querschnittsfläche unmittelbar stromabwärts des Vorkammergasventils eine gesamte Länge zwischen etwa 30 mm und etwa 70 mm aufweist, dass im Betrieb des in einer Brennkraftmaschine montierten Zylinderkopfs in einer Verdichtungsphase des Verbrennungsvorganges aus dem Vorkammergasventil ausgeströmtes Treibgas im Überströmkanal zumindest in einem an das Vorkammergasventil anschließenden ersten Abschnitt einen Gaspolster bildet.

Der Treibgas-Gaspolster weist keinen Sauerstoffanteil auf, da das Treibgas sich noch nicht mit Luft vermischt hat. Durch den fehlenden Sauerstoffanteil des Treibgas-Gaspolters, kann dieser an der Reaktion (Verbrennung) nicht teilnehmen und somit können keine Produkte der unvollständigen Verbrennung (HC-Emissionen) durch den Treibgas-Gaspolster gebildet werden.

Durch das Vorsehen eines Überströmkanals mit einer derartigen Länge und einer derartigen Querschnittsfläche, dass das ausströmende Treibgas im Überströmkanal einen Gaspolster bildet, wird zumindest im ersten Abschnitt des Überströmkanals vermieden, dass sich Verbrennungsrückstände in Form von Ablagerungen an der Mantelfläche absetzen oder wird die Bildung solcher Ablagerungen zumindest reduziert. Allfällige Ablagerungen, welche sich trotzdem an der Mantelfläche des Überströmkanals bilden, können durch eine nachfolgende Expansionsphase im Verbrennungszyklus (bei welchem die höchsten Geschwindigkeiten der Durchströmung im Überströmkanal, zumindest im zweiten Abschnitt des Überstromkanals, auftreten) durch die Durchströmung des Überströmkanals mitgerissen werden und somit der Überströmkanal gesäubert werden.

Durch den Gaspolster aus Treibgas wird außerdem eine Verbrennung innerhalb des Überströmkanals verhindert, da der Gaspolster aus nahezu reinem Treibgas besteht und aufgrund des Fehlens von Sauerstoff nicht entzündet werden kann. Der so gebildete Gaspolster aus Treibgas bildet sozusagen eine Verbrennungsbarriere im Überströmkanal. Mit anderen Worten wird durch die geometrische Ausbildung des Überströmkanals das bereits vorhandene Treibgas genutzt, um die Entstehung von Ablagerungen im Überströmkanal nahe am Vorkammergasventil durch das Nichtzulassen einer Verbrennung zu verhindern.

Vorteilhafte Ausführungsformen der Erfindung sind in den abhängigen Ansprüchen definiert.

Vorzugsweise ist vorgesehen, dass der Überströmkanal bezogen auf die Querschnittsfläche unmittelbar stromabwärts des Vorkammergasventils eine äquivalente Länge von etwa 15 bis etwa 23 mm, vorzugsweise eine äquivalente Länge von etwa 16 bis etwa 20 mm, aufweist

Die äquivalente Länge berechnet sich dabei aus einem Volumen des Überstromkanals, das erforderlich ist um einen ausreichenden Gaspolster vor dem Vorkammergasventil während der Verbrennung zu bilden. Diese äquivalente Länge ist somit als Maß für ein Ersatzvolumen zu verstehen. Die äquivalente Länge ist nicht zwangsläufig eine tatsächlich umgesetzte bauliche Größe, sondern gibt eine Länge an, welche vorzusehen ist, wenn der Überstromkanal mit einer konstanten Querschnittsfläche ausgeführt werden würde, welche Querschnittsfläche der unmittelbar stromabwärts des Vorkammergasventils vorliegenden Querschnittsfläche entsprechen würde (daraus ergibt sich das Ersatzvolumen - äquivalente Länge multipliziert mit der Querschnittsfläche unmittelbar stromabwärts des Vorkammergasventils). Die tatsächlich baulich vorgesehene Länge des Überströmkanals ergibt sich resultierend aus diesem Ersatzvolumen (äquivalente Länge multipliziert mit der Querschnittsfläche unmittelbar stromabwärts des Vorkammergasventils) und der Querschnittsveränderung entlang des Überströmkanals.

Anders formuliert, ist die äquivalente Länge die Länge eines gedachten Kanals, der das gleiche Volumen wie der tatsächliche Überströmkanal, aber durchgehend jene Querschnittsfläche des Überströmkanals hat, welche unmittelbar stromabwärts des Vorkammergasventils vorliegt.

Es kann vorzugsweise vorgesehen sein, dass der Überströmkanal weiters einen zweiten Abschnitt aufweist, in welchen der erste Abschnitt einmündet und welcher sich zumindest um einen Teil eines Umfangs der Vorkammer um diese herum erstreckt, wobei der zweite Abschnitt abgesehen von jener Öffnung, mit welcher er in die Vorkammer eintritt, eine ununterbrochene Mantelfläche aufweist.

Besonders bevorzugt kann vorgesehen sein, dass sich der zweite Abschnitt in einem Winkelbereich von etwa 20° bis etwa 270°, vorzugsweise in einem Winkelbereich von etwa 60° bis etwa 180°, um die Vorkammer herum erstreckt (360° entspricht einem Vollkreis). Dementsprechend kann besonders kompakt und platzsparend eine Verlängerung des Überströmkanales vorgesehen werden. Der Überströmkanal kann dabei in einer Kreisbahn um die Vorkammer verlaufen oder sich der Vorkammer spiralförmig nähern. Je nach Anforderung kann der Überströmkanal radial, tangential oder entlang einer Sekante in die Vorkammer münden, wobei die Einströmung und die Durchströmung der Vorkammer gesteuert oder beeinflusst werden kann.

Bei einem Ausführungsbeispiel kann im Zylinderkopf als Zündquelle eine Zündkerze vorgesehen sein. Dabei können handelsübliche Zündkerzen ihren Einsatz finden. Um die Zündkerze im Zylinderkopf aufzunehmen, kann eine Zündkerzenhülse im Zylinderkopf vorgesehen sein.

Es kann vorgesehen sein, dass sich der zweite Abschnitt in einer zu einer Trennebene zwischen Vorkammer und restlichem Zylinderkopf, vorzugsweise zwischen Vorkammer und einer Zündkerzenhülse, parallelen Ebene erstreckt. Durch ein solches Vorsehen des zweiten Abschnittes des Überströmkanals wird eine besonders einfache und ressourcensparende Möglichkeit geschaffen, den zweiten Abschnitt zu fertigen. So kann zumindest der zweite Abschnitt durch wenigstens eine, vorzugsweise gefräste, Nut in einer Wandung der Vorkammer und/oder des restlichen Zylinderkopfs gebildet sein. Im zusammengebauten Zustand wird dabei der Überströmkanal durch die Nut in einer Wandung der Vorkammer und/oder des restlichen Zylinderkopfs und einer an diese Nut angrenzende Wandung gebildet.

Demzufolge kann es vorgesehen sein, dass der Überströmkanal sowohl durch eine Wandung der Vorkammer als auch durch Material des restlichen Zylinderkopfs gebildet ist.

Bevorzugt ist vorgesehen, dass eine Querschnittsfläche des Überströmkanals, vorzugsweise zumindest über die Länge des ersten Abschnitts, zwischen etwa 1 · *π* mm² und etwa 2,5² · *π* mm² beträgt. Jedoch kann auch vorgesehen sein, dass der Überströmkanal einen über seine Länge variierenden Querschnitt aufweist. So kann beispielsweise in gewissen Bereichen des Überströmkanals eine Querschnittsverjüngung vorgesehen sein, um eine Drosselwirkung zu erzielen. Oder es kann beispielsweise in gewissen Bereichen des Überströmkanals eine Querschnittsaufweitung (oder auch ein Raum) vorgesehen sein, um eine Sammelstelle (z. B. für einen Gaspolster) auszubilden. Durch eine fortschreitende Verjüngung oder Aufweitung des Überströmkanals kann gezielt die Strömungsgeschwindigkeit des Treibgases gesteuert werden.

Es ist vorgesehen, dass die gesamte (bauliche) Länge des Überströmkanals zwischen etwa 30 mm und etwa 70 mm beträgt. Die Länge des Überströmkanals kann abhängig von der Größe einer Brennkraftmaschine, der Größe eines Brennraumes oder der Größe des Zylinderkopfes gewählt werden.

Vorzugsweise kann vorgesehen sein, dass der Überströmkanal, vorzugsweise der erste Abschnitt, einen im Wesentlichen zu einer Trennebene zwischen Vorkammer und restlichem Zylinderkopf geneigten Abschnitt aufweist. Es kann dabei beispielsweise vorgesehen sein, dass der Winkel des Überströmkanals, vorzugsweise des ersten Abschnittes, mit der Symmetrieachse des Vorkammergasventils 20° bis 70° beträgt. Durch einen solchen geneigten Verlauf (zumindest des ersten Abschnitts) des Überströmkanals lässt sich eine besonders hohe mechanische Stabilität des Zylinderkopfs erzielen. Auch der strömungstechnische Verlauf des zugeführten Treibgases wird dadurch optimiert, dass keine spitzen Winkel durchströmt werden müssen. Für die Herstellung eines solchen Gaskanals kann vorgesehen sein, dass eine Flanke des Zylinderkopfes schräg angeordnet ist. Dies kann beispielsweise so gewählt werden, dass die schräg liegende Flanke in einem rechten Winkel zur Achse des Überströmkanals steht. Dies erleichtert das Herstellen des Überströmkanals durch Bohren. Besonders bevorzugt kann vorgesehen sein, dass der Winkel des Überströmkanals zur Symmetrieachse des Ventilkörpers 20° bis 30° beträgt.

Es kann zwischen einem Sitz des Ventiltellers des Vorkammergasventils und einer Einmündung des Vorkammergasventils in den Überströmkanal ein Raum vorgesehen sein. Das ist der Fall, wenn der Ventilteller des Vorkammergasventils nicht direkt an die Vorkammer oder an den zur Vorkammer führenden Überstromkanal anschließt, sondern dazwischen ein Hohlraum ausgebildet ist. Durch Vorsehen dieses Raums wird eine besonders günstige Einströmung des Treibgases aus dem Vorkammergasventil in den Überströmkanal erreicht.

Bevorzugt kann vorgesehen sein, dass der Raum eine weitestgehend birnenförmige, sich zur Vorkammer hin verjüngende Gestalt aufweist. So kann die Einströmung von Treibgas aus dem Vorkammergasventil in den Überströmkanal günstig beeinflusst und dennoch das Volumen klein gehalten werden.

Weiters wird Schutz begehrt für eine Brennkraftmaschine, insbesondere eine stationäre Brennkraftmaschine mit wenigstens einem erfindungsgemäßen Zylinderkopf.

Die Erfindung kann bevorzugt bei einer stationären Brennkraftmaschine oder für Marineanwendungen oder für mobile Anwendungen wie sogenannte "Non-Road-Mobile-Machinery" (NRMM) - vorzugsweise jeweils als Hubkolbenmaschine (bevorzugt Gasmotor) ausgebildet - eingesetzt werden. Die Brennkraftmaschine kann als mechanischer Antrieb dienen, z. B. zum Betreiben von Verdichteranlagen oder mit einem Generator zu einem Genset zur Erzeugung elektrischer Energie gekoppelt sein.

Ausführungsbeispiele der Erfindung werden anhand der Figuren diskutiert. Es zeigen:
- Fig. 1: ein erstes Ausführungsbeispiel eines Zylinderkopfs,
- Fig. 2: den in Fig. 1 gekennzeichneten Querschnitt,
- Fig. 3: ein zweites Ausführungsbeispiel eines Zylinderkopfs,
- Fig. 4: den in Fig. 3 gekennzeichneten Querschnitt,
- Fig. 5: eine alternative Ausführungsform zu Fig. 4,
- Fig. 6: eine weitere alternative Ausführungsform zu Fig. 4,
- Fig. 7: ein drittes Ausführungsbeispiel eines Zylinderkopfs,
- Fig. 8: ein viertes Ausführungsbeispiel eines Zylinderkopfs und
- Fig. 9: ein fünftes Ausführungsbeispiel eines Zylinderkopfs.

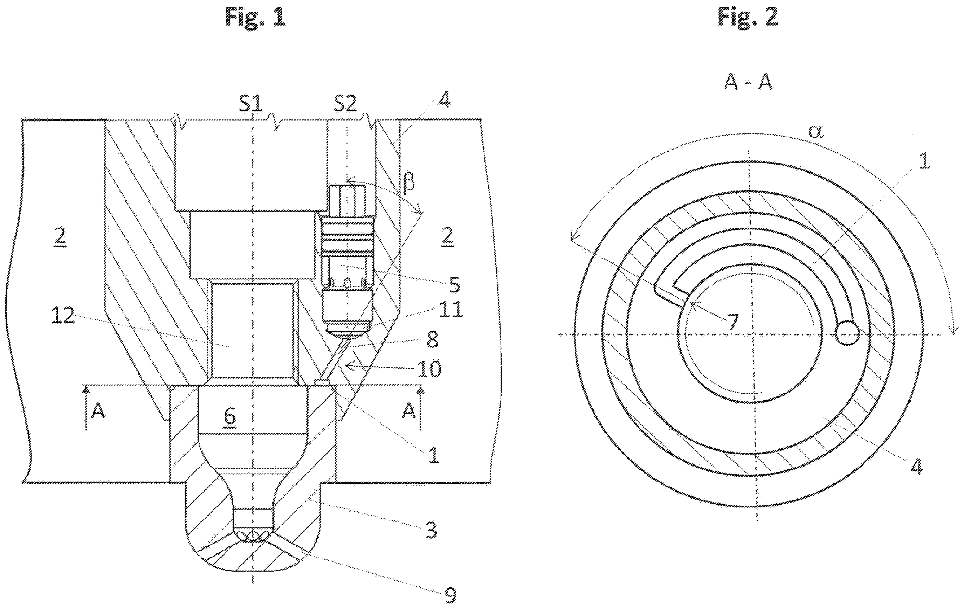

Fig. 1 und 2 zeigen ein erstes Ausführungsbeispiel eines Zylinderkopfs 2 für eine Brennkraftmaschine mit einer Vorkammer 3. Das Vorkammergasventil 5 und eine (aus Gründen der Übersichtlichkeit nicht dargestellte) Zündkerze sind in einer Zündkerzenhülse 4 eingesetzt. Die Zündkerzenhülse 4 ist im Einbauzustand in den Zylinderkopf 2 der Brennkraftmaschine (hier nicht in ihrer Gesamtheit gezeigt) eingesetzt.

Fig. 1 zeigt einen Längsschnitt durch die Kavität des Zylinderkopfs 2, in welche die Zündkerzenhülse 4 eingesetzt ist. Die Zündkerzenhülse 4 umfasst einen um die Symmetrieachse S1 konzentrischen Schacht aus Zylinderabschnitten zur Aufnahme einer Zündkerze und weist eine Bohrung mit der Symmetrieachse S2 zur Aufnahme eines Vorkammergasventils 5 auf.

Vom Vorkammergasventil 5 führt ein Überströmkanal 10 zur Vorkammer 3. Die Vorkammer 3 besteht aus dem eigentlichen Vorkammerraum 6, also dem Hohlraum, in dem die Entflammung von Gemisch stattfindet und den Überströmbohrungen 9, durch welche der Vorkammerraum 6 mit dem Hauptbrennraum (nicht gezeigt) verbunden ist. Durch die Überströmbohrungen 9 treten nach Entflammung im Vorkammerraum 6 die Zündfackeln in den Hauptbrennraum über. In der vorliegenden Ausführungsform ist die Vorkammer 3 als ein von der Zündkerzenhülse 4 separates Bauteil ausgeführt und wird mit der Zündkerzenhülse 4 verbunden, beispielsweise verpresst.

Die der Übersichtlichkeit halber nicht gezeigte Zündkerze 6 wird über die zur Symmetrieachse S1 konzentrische Zündkerzenbohrung 12 in die Zündkerzenhülse 4 so eingeschraubt, dass sie mit der Vorkammer 3 vorzugsweise bündig abschließt und ihre Elektrode(n) in die Vorkammer 3 ragen. Die Vorkammer 3 wird vom Vorkammergasventil 5 über den Überstromkanal 10 mit Treibgas angereichert.

Es ist dabei gut ersichtlich, wie der Überstromkanal 10 in einen ersten Abschnitt 8 und einen zweiten Abschnitt 1 unterteilt ist. Der erste Abschnitt 8 führt von einem an dem Vorkammergasventil angeordneten Raum 11 mit einer geschlossenen Mantelfläche bis zum zweiten Abschnitt 1, in welchen der erste Abschnitt 8 übergeht. Der erste Abschnitt 8 ist dabei als Bohrung in der Zündkerzenhülse 4 ausgeführt, welche mit einem Winkel β zur Symmetrieachse S2 oder auch zur Symmetrieachse des Ventilkörpers geneigt ist.

Fig. 2 zeigt den in Fig. 1 markierten Schnitt A-A durch die Trennebene zwischen Vorkammer 3 und Zündkerzenhülse 4. Durch diesen Schnitt ist der zweite Abschnitt 1 des Überströmkanals 10 ersichtlich, welcher sich in einem Winkelbereich α um einen Teil eines Umfangs der Vorkammer 3 herum erstreckt, wobei der zweite Abschnitt 1 (abgesehen von jener Öffnung 7, mit welcher er in den Vorkammerraum 6 eintritt) eine ununterbrochene Mantelfläche aufweist. Aus Gründen der Übersichtlichkeit ist in dieser Figur der Zylinderkopf nicht dargestellt. Der zweite Abschnitt 1 des Überströmkanals 10 ist in diesem Ausführungsbeispiel durch eine gefräste Nut in der Zündkerzenhülse 4 ausgeführt, welche durch die anliegende Wandung der Vorkammer 3 geschlossen wird und einen Kanal (zweiten Abschnitt 1 des Überströmkanals 10) ausbildet.

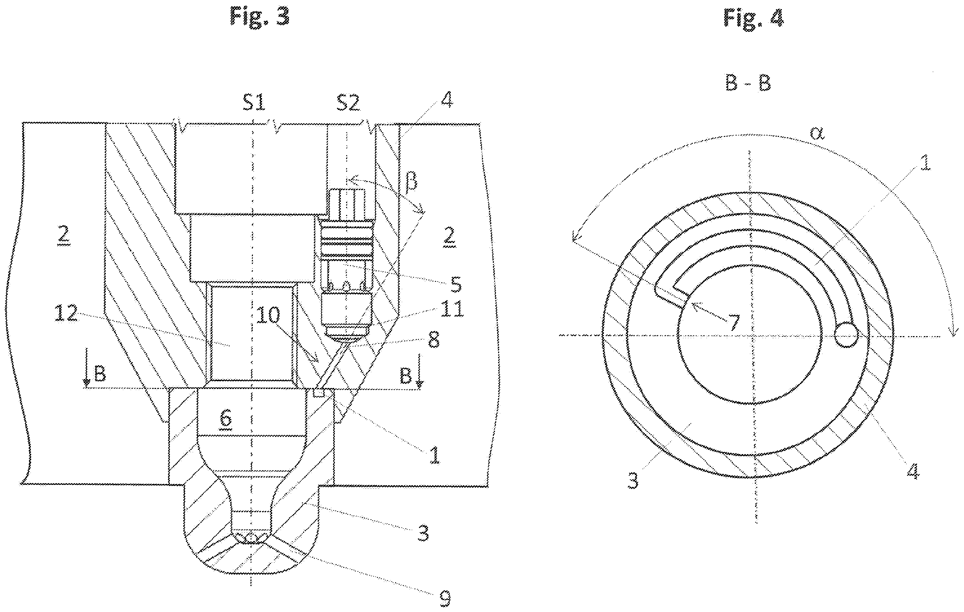

Fig. 3 und 4 zeigen ein zweites Ausführungsbeispiel eines Zylinderkopfs 2 für eine Brennkraftmaschine. Im Unterschied zu den Fig. 1 und 2 ist bei der Ausführungsvariante der Fig. 3 und 4 der zweite Abschnitt 1 des Überströmkanals 10 in der Vorkammer 3 ausgeführt. Dies ist insbesondere durch die Fig. 3 ersichtlich. Fig. 4 zeigt wiederum den in Fig. 3 gekennzeichneten Schnitt B-B durch die Trennebene zwischen Vorkammer 3 und Zündkerzenhülse 4.

Der erste Abschnitt 1 des Überströmkanals 10 erstreckt sich in Fig. 3 und 4 in einem Winkelbereich α um einen Teil eines Umfangs der Vorkammer 3 herum, wobei der zweite Abschnitt 1 (abgesehen von jener Öffnung 7, mit welcher er in den Vorkammerraum 6 eintritt) eine ununterbrochene Mantelfläche aufweist. Der zweite Abschnitt 1 des Überströmkanals 10 ist in diesem Ausführungsbeispiel durch eine gefräste Nut in der Vorkammer 3 ausgeführt, welche durch die anliegende Wandung der Zündkerzenhülse geschlossen wird und einen Kanal (zweiten Abschnitt 1 des Überströmkanals 10) ausbildet.

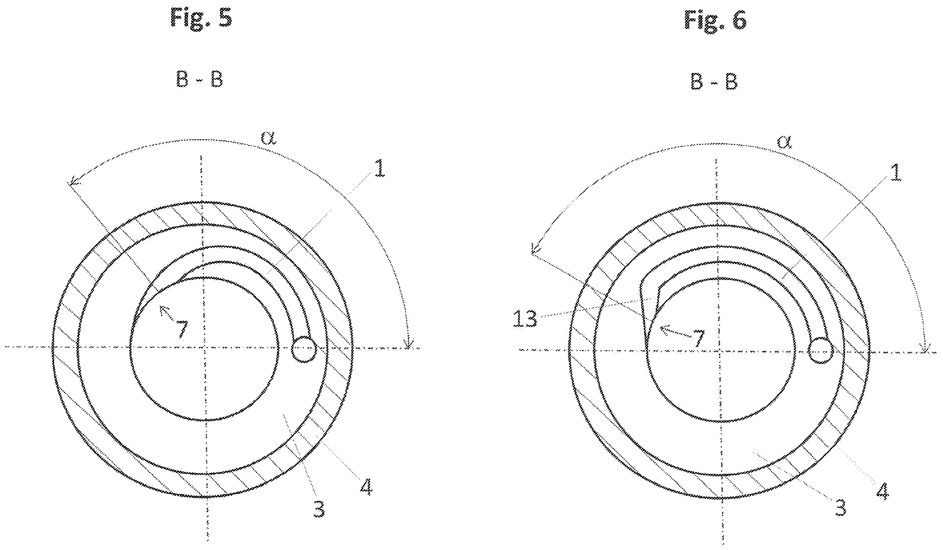

Fig. 5 und 6 zeigen alternative Ausführungsformen des zweiten Abschnittes 1 des Überströmkanals 10 in einem selben Querschnitt B-B wie auch durch die Fig. 4 gezeigt, wobei dieser Querschnitt durch die Fig. 3 definiert wird. Diese Ausführungsformen können jedoch auch analog in Bezug auf die in Fig. 1 gezeigte Lösung ausgelegt werden.

In der Fig. 5 ist ein Ausführungsbeispiel gezeigt, bei dem der zweite Abschnitt 1 des Überströmkanals 10 tangential in den Umfang des Vorkammerraums 6 mit der Öffnung 7 mündet. Durch das Verändern des Eintrittswinkels des Überstromkanals 10, genauer gesagt dessen zweiten Abschnittes 1, in den Vorkammerraum 6 kann die Durchflutung der Vorkammer 3 durch das Treibgas gesteuert werden. Der zweite Abschnitt 1 des Überströmkanals 10 ist durch eine gefräste Nut in der Vorkammer 3 ausgeführt.

Das in Fig. 6 gezeigte Ausführungsbeispiel weist einen zweiten Abschnitt 1 des Überströmkanals 10 auf, welcher vor der Öffnung 7 in den Vorkammerraum 6 eine Querschnittsverjüngung 13 besitzt. Durch das Verändern des Querschnittes des Überstromkanals 10, genauer gesagt dessen zweiten Abschnittes 1, vor dem Vorkammerraum 6 kann die Einströmgeschwindigkeit das Treibgases gesteuert werden. Der zweite Abschnitt 1 des Überströmkanals 10 ist wiederum durch eine gefräste Nut in der Vorkammer 3 ausgeführt.

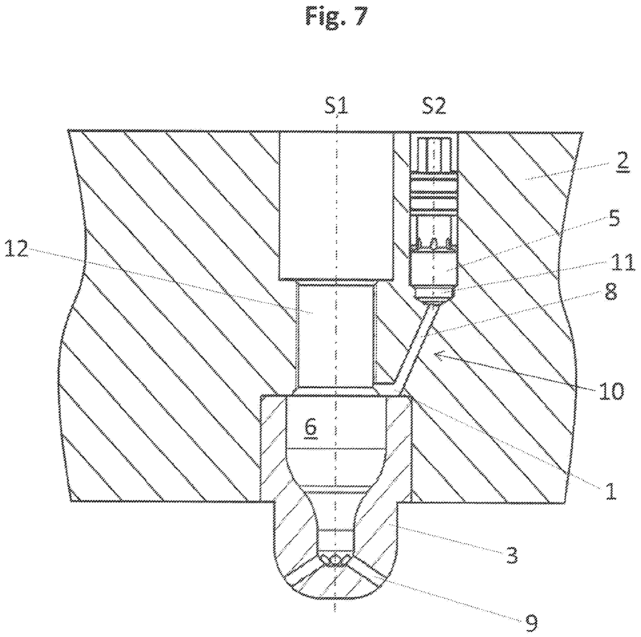

Fig. 7 zeigt ein drittes Ausführungsbeispiel eines Zylinderkopfs 2 mit einer Vorkammer 3. Bei dem durch in der Fig. 7 gezeigten Beispiel ist jedoch die Vorkammer 3 direkt mit dem Zylinderkopf 2 (beispielweise durch eine Presspassung) verbunden, ohne das Vorsehen einer Zündkerzenhülse 4. Der zwischen dem Vorkammergasventil 5 und dem Vorkammerraum 6 angeordnete Überströmkanal 10 weist einen ersten Abschnitt 8 und einen zweiten Abschnitt 1 auf. Der erste Abschnitt 8 ist durch eine mit einem Winkel β zur Symmetrieachse S2 geneigte Bohrung im Zylinderkopf 2 ausgeführt, welche das Treibgas aus dem Raum 11 in den zweiten Abschnitt 1 des Überströmkanals 10 leitet. Der zweite Abschnitt 1 ist durch eine gerade gefräste Nut im Zylinderkopf 2 ausgebildet, welche im Zusammenspiel mit der angrenzenden Wandung der Vorkammer 3 einen Kanal ausbildet.

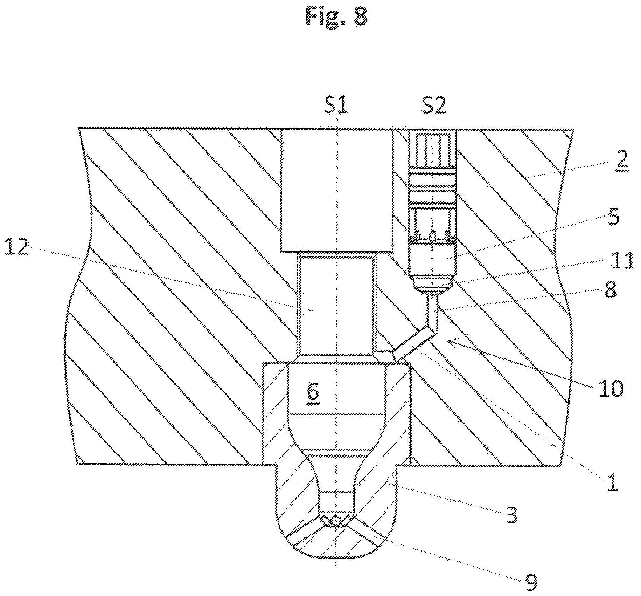

Fig. 8 zeigt ein viertes Ausführungsbeispiel eines Zylinderkopfs 2 mit einer Vorkammer 3. Im Unterschied zu den vorhergehenden Figuren ist der erste Abschnitt 8 des Überströmkanals 10 durch eine senkrechte Bohrung im Zylinderkopf 2 ausgebildet, welche konzentrisch zur Symmetrieachse S2 des Vorkammergasventils 5 und des Raums 11 verläuft. Anschließend an den ersten Abschnitt 8 des Überströmkanals 10 folgt der zweite Abschnitt 1, welcher durch eine schräge Bohrung und eine in den Zylinderkopf 2 gefräste Nut ausgebildet ist.

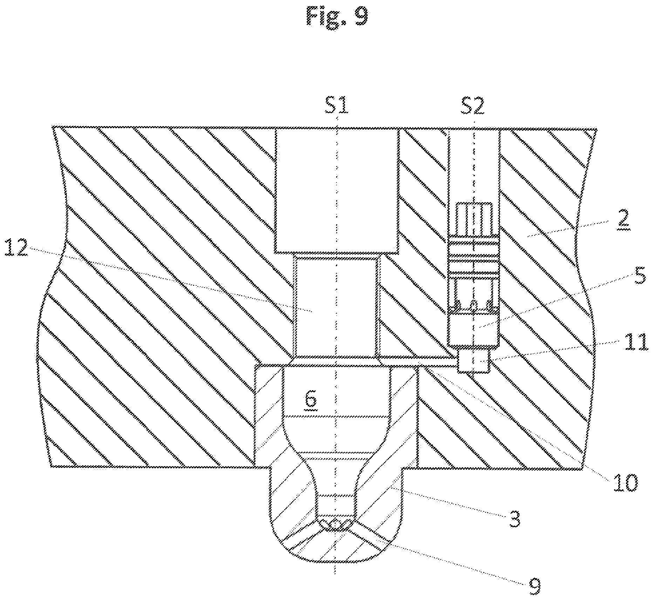

Die durch Fig. 9 dargestellte Ausführungsvariante weist lediglich eine durchgehende Verbindungsbohrung zwischen Vorkammerraum 6 und Raum 11 des Vorkammergasventils 5 auf, welche den Überströmkanal mit seinem ersten Abschnitt 8 und seinem zweiten Abschnitt 1 darstellt. Diese Ausführungsvariante ist im Vergleich zu den zuvor gezeigten relativ platzaufwändig und daher nur bei sehr großzügigen Platzangeboten anzuwenden.

### Bezugszeichenliste:

- 1: zweiter Abschnitt
- 2: Zylinderkopf
- 3: Vorkammer
- 4: Zündkerzenhülse
- 5: Vorkammergasventil
- 6: Vorkammerraum
- 7: Öffnung
- 8: erster Abschnitt
- 9: Verbindungskanal
- 10: Überströmbohrungen
- 11: Raum
- 12: Zündkerzenbohrung
- 13: Querschnittsverjüngung
- S1: Symmetrieachse
- S2: Symmetrieachse
- α: Winkelbereich
- β: Winkel

## Patentansprüche

1. Zylinderkopf für eine Brennkraftmaschine, mit einer Vorkammer (3), wobei ein Vorkammergasventil (5) in eine Kavität des Zylinderkopfs (2) eingesetzt ist und das Vorkammergasventil (5) über einen Überströmkanal (10) mit der Vorkammer (3) verbunden ist, **dadurch gekennzeichnet, dass** der Überströmkanal (10) " für eine gegebene Querschnittsfläche unmittelbar stromabwärts des Vorkammergasventils (5) eine gesamte Länge zwischen etwa 30 mm und etwa 70 mm aufweist, sodass im Betrieb des in einer Brennkraftmaschine montierten Zylinderkopfs (2) in einer Verdichtungsphase des Verbrennungsvorganges aus dem Vorkammergasventil (5) ausgeströmtes Treibgas zumindest in einem an das Vorkammergasventil (5) anschließenden ersten Abschnitt (8) des Überströmkanals (10) einen Gaspolster bildet.

2. Zylinderkopf nach dem vorangegangenen Anspruch, wobei der Überströmkanal (10) bezogen auf die Querschnittsfläche unmittelbar stromabwärts des Vorkammergasventils (5) eine äquivalente Länge von etwa 15 bis etwa 23 mm, vorzugsweise eine äquivalente Länge von etwa 16 bis etwa 20 mm, aufweist.

3. Zylinderkopf nach einem der beiden vorangegangenen Ansprüche, wobei der Überströmkanal (10) weiters einen zweiten Abschnitt (1) aufweist, in welchen der erste Abschnitt (8) einmündet und welcher sich zumindest um einen Teil eines Umfangs der Vorkammer (3) um diese herum erstreckt, wobei der zweite Abschnitt (1) abgesehen von jener Öffnung (7), mit welcher er in die Vorkammer (3) eintritt, eine ununterbrochene Mantelfläche aufweist.

4. Zylinderkopf nach wenigstens einem der vorangehenden Ansprüche, wobei im Zylinderkopf (2) eine Zündkerze, vorzugsweise mittels einer Zündkerzenhülse (4), angeordnet ist.

5. Zylinderkopf nach wenigstens einem der vorangehenden Ansprüche, wobei sich der zweite Abschnitt (1) in einem Winkelbereich (α) von etwa 20° bis etwa 270°, vorzugsweise in einem Winkelbereich (α) von etwa 60° bis etwa 180°, um die Vorkammer (3) herum erstreckt.

6. Zylinderkopf nach wenigstens einem der vorangehenden Ansprüche, wobei eine Querschnittsfläche des Überströmkanals (10), vorzugsweise zumindest über die Länge des ersten Abschnitts (8), zwischen etwa 1 · *π* mm² und etwa 2,5² · *π* mm² beträgt.

7. Zylinderkopf nach wenigstens einem der vorangehenden Ansprüche, wobei der Überströmkanal (10) - vorzugsweise der zweite Abschnitt - sowohl durch eine Wandung der Vorkammer (3) als auch durch Material des restlichen Zylinderkopfs (2) gebildet ist.

8. Zylinderkopf nach wenigstens einem der vorangehenden Ansprüche, wobei zumindest der zweite Abschnitt (1) durch wenigstens eine, vorzugsweise gefräste, Nut in einer Wandung der Vorkammer (3) und/oder des restlichen Zylinderkopfs (2) gebildet ist.

9. Zylinderkopf nach wenigstens einem der vorangehenden Ansprüche, wobei der Überströmkanal, vorzugsweise der zweite Abschnitt (1), einen im Wesentlichen parallelen Abschnitt zu einer Trennebene zwischen Vorkammer (3) und restlichem Zylinderkopf (2) aufweist.

10. Zylinderkopf nach wenigstens einem der vorangehenden Ansprüche, wobei der Überströmkanal (10), vorzugsweise der erste Abschnitt (8), einen im Wesentlichen zu einer Trennebene zwischen Vorkammer (3) und restlichem Zylinderkopf (2) geneigten Abschnitt aufweist.

11. Zylinderkopf nach wenigstens einem der vorangehenden Ansprüche, wobei zwischen einem Sitz des Ventiltellers des Vorkammergasventils (5) und einer Einmündung des Vorkammergasventils (5) in den Überströmkanal (10) ein Raum (11) vorgesehen ist.

12. Zylinderkopf nach wenigstens einem der vorangehenden Ansprüche, wobei der Überströmkanal (10) einen sich über seine Länge variierenden Querschnitt aufweist.

13. Brennkraftmaschine mit einem Zylinderkopf (2) nach wenigstens einem der vorangehenden Ansprüche.

## Claims

1. Cylinder head for an internal combustion engine, with a pre-chamber (3), wherein a pre-chamber gas valve (5) is inserted in a cavity of the cylinder head (2) and the pre-chamber gas valve (5) is connected to the pre-chamber (3) via an overflow channel (10), **characterized in that**, for a given cross-sectional area directly downstream of the pre-chamber gas valve (5), the overflow channel (10) has an overall length of between approximately 30 mm and approximately 70 mm, with the result that, during operation of the cylinder head (2) installed in an internal combustion engine, in a compression phase of the combustion process, propellant gas discharged from the pre-chamber gas valve (5) forms a gas cushion at least in a first portion (8) of the overflow channel (10) adjoining the pre-chamber gas valve (5).

2. Cylinder head according to the preceding claim, wherein the overflow channel (10) has an equivalent length of approximately 15 to approximately 23 mm, preferably an equivalent length of approximately 16 to approximately 20 mm, based on the cross-sectional area directly downstream of the pre-chamber gas valve (5).

3. Cylinder head according to one of the two preceding claims, wherein the overflow channel (10) furthermore has a second portion (1), into which the first portion (8) discharges and which extends around at least a part of a circumference of the pre-chamber (3), wherein the second portion (1) has an unbroken lateral surface except for the opening (7) with which it enters the pre-chamber (3).

4. Cylinder head according to at least one of the preceding claims, wherein a spark plug is arranged in the cylinder head (2), preferably by means of a spark plug socket (4).

5. Cylinder head according to at least one of the preceding claims, wherein the second portion (1) extends around the pre-chamber (3) over an angular range (α) of approximately 20° to approximately 270°, preferably over an angular range (α) of approximately 60° to approximately 180°.

6. Cylinder head according to at least one of the preceding claims, wherein a cross-sectional area of the overflow channel (10), preferably at least over the length of the first portion (8), is between approximately 1 · π mm² and approximately 2.5² · π mm².

7. Cylinder head according to at least one of the preceding claims, wherein the overflow channel (10) - preferably the second portion - is formed both by a wall of the pre-chamber (3) and by material of the rest of the cylinder head (2).

8. Cylinder head according to at least one of the preceding claims, wherein at least the second portion (1) is formed by at least one, preferably milled, groove in a wall of the pre-chamber (3) and/or of the rest of the cylinder head (2).

9. Cylinder head according to at least one of the preceding claims, wherein the overflow channel, preferably the second portion (1), has a portion that is substantially parallel to a separation plane between the pre-chamber (3) and the rest of the cylinder head (2).

10. Cylinder head according to at least one of the preceding claims, wherein the overflow channel (10), preferably the first portion (8), has a portion that is substantially inclined relative to a separation plane between the pre-chamber (3) and the rest of the cylinder head (2).

11. Cylinder head according to at least one of the preceding claims, wherein a space (11) is provided between a seat of the valve plate of the pre-chamber gas valve (5) and a discharge opening of the pre-chamber gas valve (5) into the overflow channel (10).

12. Cylinder head according to at least one of the preceding claims, wherein the overflow channel (10) has a varying cross section over its length.

13. Internal combustion engine with a cylinder head (2) according to at least one of the preceding claims.

## Revendications

1. Tête de cylindre pour un moteur à combustion interne, avec une préchambre (3), dans laquelle une soupape à gaz de préchambre (5) est insérée dans une cavité de la tête de cylindre (2) et la soupape à gaz de préchambre (5) est reliée par le biais d'un canal de trop-plein (10) à la préchambre (3), **caractérisée en ce que** le canal de trop-plein (10) présente, pour une aire de section donnée, directement en aval de la soupape à gaz de préchambre (5) une longueur entière entre environ 30 mm et environ 70 mm de sorte qu'en fonctionnement de la tête de cylindre (2) montée dans un moteur à combustion interne, dans une phase de compression du processus de combustion, du gaz propulseur sorti de la soupape à gaz de préchambre (5) forme un coussin de gaz au moins dans une première section (8) contiguë à la soupape à gaz de préchambre (5) du canal de trop-plein (10).

2. Tête de cylindre selon la revendication précédente, dans laquelle le canal de trop-plein (10) présente par rapport à l'aire de section directement en aval de la soupape à gaz de préchambre (5) une longueur équivalente d'environ 15 à environ 23 mm, de préférence une longueur équivalente d'environ 16 à environ 20 mm.

3. Tête de cylindre selon l'une des deux revendications précédentes, dans laquelle le canal de trop-plein (10) présente en outre une deuxième section (1), dans laquelle la première section (8) débouche et qui s'étend au moins autour d'une partie d'une périphérie de la préchambre (3) autour de celle-ci, dans laquelle la deuxième section (1) présente hormis l'ouverture (7), avec laquelle elle entre dans la préchambre (3), une surface enveloppe ininterrompue.

4. Tête de cylindre selon au moins l'une des revendications précédentes, dans laquelle une bougie d'allumage est de préférence agencée au moyen d'une douille de bougie d'allumage (4) dans la tête de cylindre (2).

5. Tête de cylindre selon au moins l'une des revendications précédentes, dans laquelle la deuxième section (1) s'étend dans une plage angulaire (α) d'environ 20° à environ 270°, de préférence dans une plage angulaire (α) d'environ 60° à environ 180°, autour de la préchambre (3).

6. Tête de cylindre selon au moins l'une des revendications précédentes, dans laquelle une aire de section du canal de trop-plein (10) s'élève de préférence au moins sur la longueur de la première section (8), entre environ 1•π mm² et environ 2,5²•π mm².

7. Tête de cylindre selon au moins l'une des revendications précédentes, dans laquelle le canal de trop-plein (10), de préférence la deuxième section, est formé non seulement par une paroi de la préchambre (3) mais aussi par du matériau de la tête de cylindre (2) restante.

8. Tête de cylindre selon au moins l'une des revendications précédentes, dans laquelle au moins la deuxième section (1) est formée par au moins une rainure, de préférence fraisée, dans une paroi de la préchambre (3) et/ou de la tête de cylindre (2) restante.

9. Tête de cylindre selon au moins l'une des revendications précédentes, dans laquelle le canal de débordement, de préférence la deuxième section (1), présente une section sensiblement parallèle à un plan de séparation entre la préchambre (3) et la tête de cylindre (2) restante.

10. Tête de cylindre selon au moins l'une des revendications précédentes, dans laquelle le canal de trop-plein (10), de préférence la première section (8), présente une section inclinée sensiblement par rapport à un plan de séparation entre la préchambre (3) et la tête de cylindre (2) restante.

11. Tête de cylindre selon au moins l'une des revendications précédentes, dans laquelle un espace (11) est prévu entre un siège de la tête de soupape de la soupape à gaz de préchambre (5) et une embouchure de la soupape à gaz de préchambre (5) dans le canal de trop-plein (10).

12. Tête de cylindre selon au moins l'une des revendications précédentes, dans laquelle le canal de trop-plein (10) présente une section transversale variant sur sa longueur.

13. Moteur à combustion interne avec une tête de cylindre (2) selon au moins l'une des revendications précédentes.
